(19) Europäisches Patentamt
European Patent Office
Office européen des brevets

(11) **EP 2 660 756 A1**

(12) **EUROPEAN PATENT APPLICATION**

(43) Date of publication:
**06.11.2013 Bulletin 2013/45**

(51) Int Cl.:
**G06N 3/00** (2006.01)

(21) Application number: **12186241.1**

(22) Date of filing: **27.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.05.2012 EP 12166810**

(71) Applicant: **Siemens Aktiengesellschaft 80333 München (DE)**

(72) Inventors:
• **Hartmann, Dirk 83550 Emmering (DE)**
• **Pfaffinger, Alexander 81739 München (DE)**
• **Royer, Christian 85521 Ottobrunn (DE)**

(54) **Method, apparatus and computer program product for simulating the movement of entities in an area**

(57) The present invention discloses a method, apparatus and computer program product for simulating a movement of entities in an area, comprising identifying a number of entities in movement in the area, and a direction of movement of the entities within the area, inputting information regarding a topology of the area and the identified information regarding the entities in movement in the area into a computing apparatus, performing a simulation of entities in the area, and calculating a prediction regarding a flow of entities by constructing a navigation field regarding the entities in the area depending on a density characteristic of entities in the area.

FIG 1

EP 2 660 756 A1

**Description**

Field of the Invention

The present invention is directed to a method, apparatus and computer program product for simulating the movement of entities. The present invention is furthermore directed to a computer program being adapted to perform the method of the invention and a data carrier storing the computer program for simulating a movement of entities in an area.

Background of the Invention

Simulators of pedestrian streams imitate the behaviour of crowds in different infrastructures and places, such as buildings, stadiums, etc., for instance for statistical purposes, for administrative purposes and furthermore for safety reasons of pedestrians and traffic participants.

One goal of pedestrian stream simulation is to gain improved control over crowd behaviour and especially to predict crowd behaviour. Off-line simulations allow to accurately re-enact several scenarios and critical situations. Hence the simulations allow to find adequate measures for avoiding dangers and thus improving security in the simulated area.

A variety of potentially dangerous scenarios are known. These scenarios range from environmental disasters to cultural events. In case of emergency it is required to evacuate people as fast as possible. In order to deliver reliable results crowd simulations must reproduce crowd behaviour with a high degree of realism. Hence, a pedestrian/crowd simulation model must capture important parameters of pedestrian/crowd behaviour.

Commonly known methods for pedestrian simulation apply gradually increasing details of modelling, and compare the simulation results and the empirical data. The underlying rules of interaction can be assumed to be general to a certain degree depending on a large number of parameters. Rather general rules of interaction cannot be expected to capture every situation and need to be adapted to the scenario of interest. Hence, the model of pedestrian streams must be calibrated and adjusted. Calibration of a specific real world system refers to the adaptation of the model parameters of pedestrian streams through specific information. Commonly known dependencies taken into account at calibration are for example the basic environmental conditions, any structural constraints imposed by the architecture of a surrounding building, as well as socio-cultural aspects.

In the currently known methods, fundamental diagrams are used for predicting behaviour of pedestrian streams. One may for instance apply an empirically derived fundamental diagram of pedestrian dynamics. Such a diagram of pedestrian dynamics may for instance indicate that there is a relationship between the density of pedestrians and their walking speed. Also a scenario dependency can be indicated, such as that the walking speed in one direction depends on the density of pedestrians moving in the opposite direction.

Commonly known methods do not introduce a fundamental diagram allowing predictions regarding all possible scenarios, cultures and locations. It is known to model pedestrian behaviour as a function of pedestrian behaviour parameters.

Commonly known methods perform pedestrian stream simulation and calibration thereof for known data from databases or other sources in an off-line way. Off-line refers to non-real-time calibrations of pedestrian stream simulation devices. Commonly known methods are complex and resource intensive.

The reasons for the simulation of pedestrian streams are dependent on the event itself, such as gathering virtual experience regarding people's behaviour, either for event planning or building design reasons. In order for the simulated results to meet the reality conditions, the simulated results should be as close as possible to the reality. This correspondence should apply to people's velocity, the behaviour in between persons, their walking destination in dependence to time and source, etc.

While analyzing the behaviour of people in a main station or airport, it is evident that many people are carrying different kinds of baggage for travelling. The baggage drastically influences their walking speed and also their flexibility of movement.

The modelation methods currently used, while aiming to model the behaviour of a person in a given space, fail to take into account the presence of other pedestrians in the same space, or the presence of other bulky objects in the space, such as luggage. Alternatively, the presence of other pedestrians in the same space or the presence of bulky luggage is taken into account in a very limited way.

Further, the models that may capture at least one of the variables stated above require large computational efforts. In this category are included the models that take into account to a smaller degree the presence of other pedestrians in the modelled space or the presence of bulky luggage. Further, even models that to some degree take into account interactions between the modelled pedestrians with others pedestrians present in the same modelled space fail to take into account the phenomenon of lane formation in dense crowds. Other disadvantages of the currently known models are, for models operating on a medium scale, that they fail to take into account the direction of movement of the pedestrians.

Therefore, what is needed is to provide a simulation method and tool that is able to simulate the behaviour of pedestrians with increased realism, that is taking into account the various influences present in the modelled space that impact the modelled pedestrians. What is therefore required is a method for accurately simulating the movement of a plurality of entities in a space, wherein the entities may comprise pedestrians.

Short Summary of the Invention

It is therefore an object of the present invention to provide a method, apparatus, and computer program product for realistically simulating the movement of a plurality of entities, and as such allowing predictions of motion behaviours in real-time.

This above referenced objective technical problem is solved at least by the method of claim 1, by an apparatus provided by claim 10, and a computer program product of claim 11.

In accordance with a first aspect of the present invention, a method for simulating a movement of entities in an area is proposed, the method comprising identifying a number of entities in movement in the area, and a direction of movement of said entities within said area, inputting information regarding a topology of the area and the identified information regarding the entities in movement in the area into a computing apparatus, performing a simulation of entities in said area, and calculating a prediction regarding a flow of entities by constructing a navigation field regarding the entities in said area depending on a density characteristic of entities in said area.

In accordance with a further aspect of the present invention a system for simulating a movement of entities in an area is proposed, the system comprising at least a data bus system, a memory coupled to the data bus system, wherein the memory includes computer usable program code, a processing unit coupled to the data bus system, wherein the processing unit executes the computer usable program code to identify a number of entities in movement in the area, and a direction of movement of said entities within said area, input information regarding a topology of the area and the identified information regarding the entities in movement in the area into a computing apparatus, perform a simulation of entities in said area, and calculate a prediction regarding a flow of entities by constructing a navigation field regarding the entities in said area depending on a density characteristic of entities in said area.

In accordance with a further aspect of the present invention a computer program product is provided for simulating a movement of entities in an area, comprising a tangible computer usable medium including computer usable program code for performing prediction of movement of entities, the computer usable program code being used for identifying a number of entities in movement in the area, and a direction of movement of said entities within said area, inputting information regarding a topology of the area and the identified information regarding the entities in movement in the area into a computing apparatus, performing a simulation of entities in said area, and calculating a prediction regarding a flow of entities by constructing a navigation field regarding the entities in said area depending on a density characteristic of entities in said area.

Other characteristics and advantages of the present invention will be apparent in connection with the dependent claims.

In accordance with the present invention, the method of the invention is further characterised by the step of performing a simulation of entities in the area comprising performing a temporal discretization of a time period the entities move in the area, identifying origins and destinations for the entities moving in the area, and constructing a navigation field based at least on a discrete topology of the area, the temporal discretization of a time period the entities move in the area, and on the identified origins and destinations of the entities in the area.

In accordance with the present invention, the method of the invention is further characterised by the fact that constructing the navigation field is performed based on the density characteristic of entities being a local density of entities in the area.

In accordance with the present invention, the method of the invention is further yet characterised by the fact that constructing the navigation field is performed based on the density characteristic of entities being a speed of the simulated entities as a function of the local density of entities.

In accordance with the present invention, the method of the invention is further yet characterised by the fact that constructing the navigation field is performed based on the density characteristic of entities being a speed of the simulated entities as a function of a plurality of densities of entities, each density of the plurality of entities pertaining to entities moving in different directions.

After a period of time the entities distribution in the area is changed, since the entities move, and the navigation field is reconstructed based on the changed entities distribution in the area. The steps of the method are iterated till a prediction regarding the flow of entities is obtained and the navigation field is adapted to each new distribution of entities.

The results of the method are supporting a decision making of an operator in charge of the simulated space, the method further comprising feeding back the calculated simulation to an operator to make a decision regarding the traffic management in the area.

The methods of the invention exhibit a plurality of advantages such as:

The present method of simulation does not require information regarding additional floor fields. It is more efficient than other methods known in the art both in terms of computation resources required and in terms of accuracy of the obtained simulation, since it takes into account both the presence of other pedestrians in the simulation space and takes into account lane formation in the case that large pedestrian crowds are simulated, leading therefore to increased realism for the obtained simulation model.

Other characteristics and advantages of the present invention will be apparent in connection with the following description.

Brief Description of the Drawings

The solution that is presented in the present document is applicable mostly to small to medium scale navigation of pedestrians, specifically what is modelled is the navigation of a pedestrian from one intermediate destination to a next destination.

For a more complete understanding of the present invention, the objects and advantages thereof, reference is now made to the following descriptions taken in conjunction with the accompanying drawings, in which:

Fig. 1 illustrates a cellular automaton based on a grid with hexagonal cells;

Fig. 2 is a flow chart representation of the method for simulating the movement of entities in area, in accordance with a possible embodiment of the present invention.

Fig. 3 is the illustration of an embodiment of a data processing system in which a method for predicting the behaviour of pedestrians, in accordance with an embodiment of the present invention, may be implemented.

Non- limiting and non- exhaustive embodiments of the present invention are described with reference to the above referenced figures, wherein like reference numerals refer to like parts throughout the various views unless otherwise specified. The order of description should not be construed as to imply that these operations are necessarily order- dependent.

Detailed Description of the Invention

Various expressions will be used in the present document while describing the present invention. These terms are to be understood as discussed below or in accordance with the meaning a person skilled in the art of pedestrian simulation would award said terms.

By "entity" or "entities" are understood various types of moving objects, such as objects moving on a surface, such as pedestrians, cars, pedestrians with luggage, etc. or objects moving through air. Although in the following description the present invention is described mainly in connection with the movement of pedestrians, the present invention should not be understood as applicable only in a limited way to the simulation of movement of only pedestrians, but it should be understood as applicable to a broad range of objects moving in an area. These objects are referred to therein and in the claims as "entities".

By "topology" of an area is understood a set of certain properties that are used to define the area.http://en.wikipedia.org/wiki/Topological space

By "density characteristic of entities an area" is understood a unit describing the density of entities in a particular space via characteristics of that area. In accordance with the present invention the density characteristic of entities may be a local density of entities in the area, a density that is a function of a speed of the simulated entities as a further function of a local density of entities, or a density that is a function of a plurality of densities of entities, each density of the plurality of densities pertaining to entities moving in different direction.

By "lane" is understood a formation of pedestrians, all walking in the same direction, possibly one behind each other. A lane is automatically formed when pedestrians walk from a direction to another direction.

If no lanes are formed while the pedestrians move in an area of high density in the simulated space, then the pedestrians are blocking each other and none of the simulated pedestrians are moving any more.

Taking into account lane formation within the simulated behavior of pedestrians leads to increased realism of the simulation, since lane formation by the pedestrians in a particular space is a phenomenon observed in reality. Further, the absence of lane formation in the simulated behavior permits an operator provided with the simulated pedestrian behavior to conclude that the pedestrians in that space are no longer moving since as discussed above, the absence of lane formation in the space leads to congestion. By "small scale" simulation it is referred to the simulation of the pedestrians that are adapting their route trying not to collide with other pedestrians, which in the following we will refer to as short or small scale navigation. In a small scale simulation the pedestrians in the direct neighborhood are taken into account.

By "medium scale" simulation is understood a simulation of pedestrians that navigate from their current position to the next point of interest, which we will refer in the following as an intermediate target. Depending on their densities, other pedestrians are taken into account on this navigation level, i.e. if pedestrians see dense crowds they adapt their route immediately trying to move around the crowd. On the medium scale simulation other pedestrians are neglected and a static navigation field is considered.

By "dynamic" simulation is a simulation meant where the navigation field is dynamically recalculated after each discretization time period has elapsed, while taking into account the presence of other pedestrians in the simulated space.

Although the concept of small to medium navigation is independent of a specific microscopic simulator, an example of such cellular automaton model will be presented below. As it will be described in the following the approach relies upon a two dimensional spatial discretization using for example hexagons. Each hexagon is either empty or occupied by a single pedestrian or obstacle. The size of a single hexagon is chosen such that it accommodates an average European male person, that has an approximate size of $0,185 \text{ m}^2$. The approach also relies upon time discretization, and said discretization involves equidistant time steps. In each time step a subset of persons on the cellular automaton is chosen and it is allowed to move. The simulator relies upon a sequential update which ensures that pedestrians with higher free flow velocities are allowed to move more often according to their speed. A Gaussian distribution is used, as it will be described in the following.

Each pedestrian allowed to move in a time step chooses one of its neighboring cells to move to.

This decision is based on potentials. To each intermediate destination and a given position an attractive potential is assigned, in the simplest case given by the shortest Euclidian distance. The "long range" potential used for medium scale navigation, for example from the current position to the next intermediate destination, is referred to as floor field or navigation field.

To each pedestrian and obstacle a short range, of approximately 1 or 2 m repulsive potential is assigned. That is such since also short range navigation is modeled via potentials. The pedestrian then moves to the unoccupied neighbor cell with the smallest summed potential value.

As stated above, for the prediction of the behaviour of one entity, such as a pedestrian, a cellular automation model may be employed.

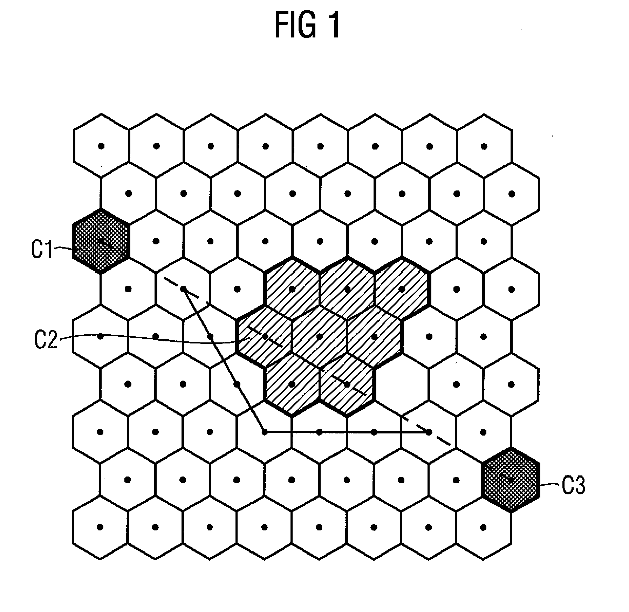

Figure 1 shows a cellular automaton based on a grid with hexagonal cells as being used by the method for predicting the behaviour of entities, according to an aspect of the present invention. According to an embodiment of the present invention, a pedestrian or entity motion can be simulated using a discretization of the simulation area by means of cells, which are hexagonal in the present embodiment. Said cells may in other embodiments be triangular or rectangular, among others. At every time step of the simulation procedure of an entity motion, a cell, has a state being defined by the number of pedestrians or entities being located in this cell. Pedestrians or entities move from one cell to another thus changing the state of each of the cells.

In the example shown in figure 1 a pedestrian is located at cell C1 and desires to move forward to cell C3. The pedestrian being located in cell C1 may proceed directly to cell C3, which is indicated in the present figure 1 by a dashed line. As the pedestrian being located in C1 encounters an obstacle, for instance in cell C2, it may not be possible to move directly from the location C1 to the cell C3. In this example it may be required to move around the obstacle, for instance in cell C2, which is indicated by a line in the present figure 1. The cell model as demonstrated in figure 1 may be a part of a motion simulation model. Different velocities of entities can be implemented by allowing the pedestrian to proceed over several cells per simulation step. Hence, in the present embodiment velocity can also be referred to as cell speed indicated by the number of cells covered per simulation step.

In the shown example the pedestrian moving from cell C1 to a cell C3 is a pedestrian. Cell C1 represents an elevator transporting pedestrians from a subway station to the surface. Cell C1 therefore acts as a source of pedestrians. Pedestrians may proceed across a public place by moving around a shop being represented by cell C2 and proceed to an exit, being represented by cell C3. Therefore, cell C3 acts as a pedestrian sink.

The basic cell model, as being introduced by the present figure 1, leaves degrees of freedom to be chosen, such as the individual speeds of pedestrians. Individuals may move at a specific velocity, which can be a sample of a Gaussian random distribution, parameterized by mean and standard deviations that depend on circumstances like gender, age, day time, place, among others. In crowds, pedestrians speed decreases because of obstructions imposed by other pedestrians. Deceleration of pedestrians may also depend on the density of pedestrians. This aspect can be modelled by deceleration classes and slow down factors for velocities depending on the occupancy of neighbouring cells by other pedestrians. It may therefore be the case, that in cell C1 several pedestrians are located. It may further be possible, to define a threshold of the allowable number of pedestrians per cell, which indicates, that the specific cell is occupied and therefore represents an obstacle for further pedestrians.

The cell model illustrated in figure 1 may be a part of the motion simulation model, while the modelling of pedestrian or entity motion behaviour is by no means restricted to the cell model. The person skilled in the art therefore appreciates further implementations of a motion simulation model, such as an ontology, a set of rules, a formal model and/or a semi-formal model.

As described above, cellular automation models are based on simulations based on a numerical grid. Often as shown in figure 1 a hexagon or rectangular grid of a certain size is used in order to model the behaviour of people with an average geometrical diameter, shape and size.

The same models may be used for predicting the behaviour of other entities, such as cars, pedestrians with luggage or children, etc.

In accordance with the present invention, this field approach is extended to keep spatial and temporal discretization artefacts to a minimum.

In the microscopic pedestrian simulator introduced above as well as in other microscopic simulators medium scale navigation is realized via so called floor field methods. For each intermediate destination a corresponding floor field is constructed for navigation. Such floor fields are spatial fields which have a minimum at the corresponding intermediate destinations and which are monotonically increasing with increasing distance from the intermediate destination.

In a possible embodiment a floor field is given by the Euclidean length of the shortest paths from each portion to the corresponding intermediate destination. It can be efficiently evaluated if the shortest path to the intermediate destination is not blocked by an obstacle. If it is blocked, then determining the length of the shortest path can be quite complicated, and in the art various alternatives have been proposed for this determination. One of these determination methods relies upon the use of the Eikonal equation to derive floor fields.

Usually navigation fields comprise a static structure. In contrast, the present invention makes use of dynamic floor fields. A dynamic floor field takes into account a dynamic recalculation of the navigation field taking into account also other pedestrians and as a result yielding more realistic results.

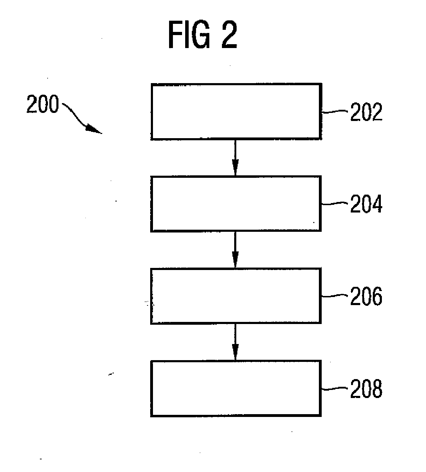

Fig. 2 is a flow chart representation of the method for simulating the movement of entities in area, in accordance with a possible embodiment of the present invention.

Navigation in existing microscopic pedestrian simulators can be distinguished into three different levels: large scale, medium scale, and small scale.

On a large scale level pedestrians navigate from one point of interest to the next to their final target, e.g. from crossing to crossing. On this large scale other pedestrians are taken into account only very coarsely, since typically the way cannot be observed completely.

On a medium scale level, pedestrians navigate from their current position to the next point of interest, which is referred to as an intermediate target. Depending on their densities, other pedestrians are taken into account on this navigation level, i.e. if pedestrians see dense crowds they adapt their route immediately trying to move around the crowd.

On a small scale level pedestrians adapt their route trying not to collide with other pedestrians, which in the following are referred to as short or small scale navigation. Here, pedestrians in the direct neighbourhood are taken into account.

Most pedestrian simulators take other pedestrians into account only on the small scale. On the medium scale other pedestrians are neglected and a static navigation field is considered. By taking into account also low to medium densities of pedestrians into the simulated space, typically good and relatively realistic results are obtained. In the case of high pedestrian densities this is however not always the case. Only very few simulators use dynamic medium-scale navigation taking also other pedestrians into account. Since recently effective computational techniques have been proposed for constructing appropriate dynamic floor fields, the simulation of large dense crowds is well in reach.

The present invention proposes a modification of the methods proposed in art.

This allows that not only unnatural congestions to be avoided, but also to realistically capture effects like lane formation in dense crowds.

Instead of considering a repulsion of pedestrians on a short and medium scale independent of the walking direction, the method of the present invention takes walking directions into account. On the short scale navigation, a similar model has been realized using many different approaches. On the medium navigation level, directions of other pedestrians are typically not taken into account.

In accordance with the method of the present invention, as it will be described in detail in the following, other pedestrians and their walking directions are also taken into account based on a dynamic recalculation of the navigation floor field using pedestrian repulsion potentials adapted to relative walking directions of pedestrians.

The approach does not need the calculation of an additional floor field, as required by the approach of utilized up to now in the field. Furthermore the approach is as efficient as the other methods known in the field and simultaneously captures typical effects such as lane formation.

Using more efficient strategies than the strategy presented in the art for moving along gradients of the floor field, as well as more elaborate algorithms for continuously updating the floor fields, the method is at least as efficient as classical floor field based approaches in microscopic pedestrian simulators. However, the extensions of the present method allow significantly more realistic simulation results and thus a better prediction of pedestrian flows and egress times. Thus the method is a promising candidate to replace the medium scale navigation layer in other multilevel pedestrian simulators known in the field.

The flow chart 200 of figure 2 refers to the method of the present invention, for simulating the movement of entities such as pedestrians in a particular space, the method comprising as a first step 202 identifying a topology of the area. Exemplary embodiments for the space or area that is subject to observation and regarding which a simulation of the movement of the pedestrians in the area is being performed are an office building, an airport or a train station. Information regarding the topology of the area may be obtained from a data base comprising information regarding the configuration of the area under observation or should this information lack, it may be obtained from a plurality of sensors present in the area. In a microscopic two dimensional model used to describe the area, the area can be discretised in hexagonal cells dimensioned for example such that they will accommodate the size of a pedestrian.

At a subsequent step 204 in accordance with the method are identified, at a time of interest, the number of pedestrians in movement in the space, and a direction of movement of the pedestrians within the respective space/area. Cameras, sensors, RFID detectors and other sensory means may be employed to identify information regarding the number of people present in the space at a certain time and regarding their direction of movement. Time discretization in equidistant time steps is as well employed to provide a more finite description of the pedestrians in movement in the subject space.

In step 206 at least the identified information regarding the topology of the space and the identified information regarding the pedestrians in movement in the area is input into a computing apparatus. The computing apparatus may be either one of a software tool, a hardware tool or a combination of software and hardware.

The computing apparatus comprises a simulation module capable of performing a simulation regarding the movement of the pedestrians present in the area of interest.

As it will be described in the following, the simulation module comprises among others a simulation model, simulation model that is exemplarily implemented in software form and capable of describing with a heightened degree of realism the movement of the pedestrians in the area. The simulation model takes into account at least the identified information regarding the topology of the area and the identified information regarding the pedestrians in movement in the area. Based on this information the simulation module constructs a prediction regarding the flow of pedestrians, consisting at least of the construction of the navigation field. This prediction is calculated every couple of seconds or as often as defined by the constant employed to define the time discretization.

Therefore, in a last step 208 a prediction is calculated regarding a flow of pedestrians by constructing a navigation field regarding the pedestrians in the space.

Referring now to the simulation module, the simulation module performs a simulation of a stream of pedestrians. The simulation module performs a discretization of the space, by dividing the space in cells and according to the explanation provided above, the movement of the pedestrians through the space is described as the movement of the pedestrians from cell to cell.

The simulation module also performs at least one other function, that of identifying for the pedestrians present in the space their origins and their destinations.

Based at least on this information the simulation module builds a navigation field, based at least on the discrete topology of the space, the temporal discretization of the time the pedestrians move in said space and on the identified origins and destinations of the pedestrians in the space. The pedestrians in the space need a navigation field to find their way through the building.

A representation of the navigation field may be made via a potential. The navigation field is built under the assumption, supported as well by empirical observations, that a pedestrian always tries to walk along an equipotential line or go to the cell in the discretized space that has the minimum potential. The pedestrian looks around at its neighbouring cells and chooses a cell with the minimum potential to move to. A navigation field or a potential is built by solving a characteristic equation, called the Eikonal equation.

In the art the Eikonal equation has already been solved in various references in order to find the potential or to build the navigation field. Exemplarily such a solution has been described in references PCT/EP 2010/061431 or WO 2011/026708.

From the above referenced documents, it may be deducted that solutions of the Eikonal equation may be used in two dimensional floor field values. As it is already described in the art, the Eikonal equation models arrival times $T(x, y)$ of a wave extending with a normal speed $F(x, y) > 0$ from an initial curve point characterized by $T(x, y) = 0$. The outline of the destination is given by the equation:

$$F^2 \cdot \left[ \left( \frac{\partial T}{\partial x} \right)^2 + \left( \frac{\partial T}{\partial y} \right)^2 \right] = 1 \qquad (1)$$

where T is the arrival time of the wave field at position x, and y;
x, and y are the spatial coordinates, and
*F is the speed* with which the wave is arriving.
The evolution of waves can be described with the help of the Eikonal equation.

As also shown in the above quoted references the Eikonal equation may be solved efficiently on the dual grid of the underlying hexagonal cellular automaton using the fast marching method. Furthermore, efficient techniques for increasing computational speeds, up to a factor of 10, have been recently introduced.

Assuming a constant speed, such as F (x, y) =1m/s implies that T (x, y) corresponds to the Euclidian lengths of the shortest paths. Further, the inverse of the speed F (x, y) may be adapted to the local properties of the space, such as to take into account the different terrains.

The method of the present invention aims at improved realism of description of the pedestrian movement in the modelled space. As such the present invention proposes an improved method wherein the inverse of the speed F taken into consideration in the Eikonal equation is conceived in such a manner that it leads to an improved realism of the simulation. The speed describes how the wave is expanding along an equipotential line. As stated above, the pedestrians move along the equipotential line. As such a better choice regarding the inverse of the speed description results in a better and more accurate description of the pedestrian movement along the equipotential lines and as a result a more accurate navigation field is obtained, since the navigation field is characterised by the potential.

In accordance with the present invention the speed F is adapted to reflect the pedestrian densities present in a particular space and as a result the speed F reflects as well the influence of the presence of other pedestrians in the vicinity of the modelled pedestrians. The value of speed F is proposed in accordance with the present invention as:

$$F(x, y) = \frac{c}{\rho(x, y)} \qquad (2),$$

where $\rho(x,y)$ is a measure of the local density of pedestrians, and
c is a constant used to fine tune the influence of other pedestrians upon the pedestrians whose behaviour is being simulated.

c is a constant chosen in such a way that the predictions provided by the simulation model mimic the observations. The value of c is different at different times during the day, depending upon the density of pedestrians present in the simulated space.

By employing in the Eikonal equation the speed F calculated as in formula 2 above a simulation is obtained showing a more realistic behaviour. This leads to the conclusion that the consideration of other pedestrians within the medium scale navigation model mimics significantly better the human behaviour. It has been observed that the speed of one pedestrian is influenced by the speed of other pedestrians, but only if the pedestrians have the same direction of movement or the same destination.

Therefore in accordance with one aspect of the present invention building the navigation field takes into account a local density of pedestrians in the space. A measure of taking into account the local density of pedestrians in the space is via calculating the speed of the simulated pedestrians as a function of the local density of pedestrians.

In order to further improve the realism of the simulation, the present invention also proposes to take into account the destination of the pedestrians, and as such the possible lane formation by said pedestrians. As discussed earlier in this document, pedestrians walking in the same direction form a lane.

As known from the art, and at least from the documents identified above, the previous simulation models consider pedestrians independent of their direction of walking. This is an important shortcoming of these models, especially considering that pedestrians behave along with flows having multiple directions. For the exemplary case of a corridor, one notes that there are available at least two directions for the pedestrians streams. Pedestrian walking in the same direction repel less as pedestrians walking in the opposite direction. Such a tendency is taken into account in models that take into account short scale navigation, or in force based models, but this is not taken into account in models that realize medium scale navigation.

In accordance with the present invention, specifically for simulation models that take into account medium scale navigation, it is taken into account as well the effect of the direction of walking of different pedestrians in a space.

To consider the influence of different walking directions on navigation behaviour, the pedestrians are to be grouped in groups depending upon their direction of movement, taking into account whether they move into the same or in different directions. Another grouping possibility can be in accordance with their current or intermediate destinations. Since the direction of walking for a pedestrian in accordance with the present algorithm is in a preferred embodiment along the gradient of the navigation field, all pedestrians sharing the same navigation field walk in the same direction. Thus all pedestrians having the same destination have the same walking direction.

Therefore, considering the above, in accordance with the present invention is proposed to state the speed F in a possible embodiment as:

$$F_D(x, y) = \frac{1}{c_D \rho_D(x, y) + c_{D' \neq D} \rho_{D' \neq D}(x, y)} \qquad (3)$$

for determining the navigation floor field for a destination D in the Eikonal equation. Thus densities of pedestrians $\rho_D(x, y)$ sharing the same destination D are considered differently than densities of pedestrians $\rho_{D' \neq D}(x, y)$ having a different destination $D' \neq D$. In the above it is assumed that following pedestrians with a different destination is significantly less attractive for the modelled pedestrian than to follow pedestrians that have the same destination. Further it is also assumed that $c_D \langle c_{D'}$. The short range pedestrian repulsion is adapted accordingly, and as such the pedestrians with the same destination have a smaller repulsion than pedestrians with a different destination. As such the pedestrians with the same destination tend to form lanes that based on all of the above are taken into account when calculating the speed. As a result of calculating the speed $F_D$ in accordance with formula 3 above, the cellular automaton model described at least in the references identified above does not only reproduce significantly more realistic navigation behaviour but also naturally reproduces lane formation. The increased realism may be shown by simulating various scenarios involving lane formation.

Therefore, in accordance with an aspect of the method of the present invention, building a navigation field takes into account a lane formation by pedestrians in the space. A measure of taking into account the formation of lanes by pedestrians in the space is a speed of the simulated pedestrians defined as a function of a plurality of densities of pedestrians, each density of the plurality of densities pertaining to pedestrians walking in a different direction.

After a predetermined period of time, predetermined by the temporal discretization employed, the navigation field is reconstructed, since during said predetermined period of time the pedestrians in the space have changed positions. As such the navigation field needs to be adapted to the new pedestrian distribution. This determination is repeated again after a new period of temporal discretization has elapsed, and it is repeated as many times as necessary to obtain an accurate prediction regarding the movement of the pedestrians in the space. The operator who is in charge of making a decision based on the simulation may as well determine the period of time for which the steps leading to the construction of the navigation field will be repeated. Therefore the steps of method are iterated till an accurate prediction regarding the flow of pedestrians is obtained.

In a scenario where the simulation is used for the evacuation of a building, the simulation is stopped after a predetermined period of time or after all people or pedestrians has been evacuated.

The simulation results obtained via the method described above may support a decision making of an operator in charge of the simulated space, since the calculated prediction may be fed back in real time to an operator to make a decision regarding the pedestrian traffic management in the monitored space.

Most conventional classical microscopic pedestrian simulators suffer from the drawback that they do not simulate realistically the behaviour of pedestrians around corners. An unrealistic simulation may be calculated if a larger density of pedestrians is attempting to move around a corner. When such a scenario is analysed on a medium scale, what is observed is that the pedestrians choose the shortest path around a corner. As a result it is simulated that the pedestrian flows concentrate around the corner. This is a result that is far from the reality. When analysing the same scenario with a small scale simulation model the interaction of incoming pedestrians with others pedestrians present in the area is taken into account but only the pedestrians that are present within a short distance from the corner are taken into account. This yields an inaccurate simulation result since the interaction with pedestrians present at the corner is realized too late and in reality a congestion occurs.

In contrast, in the same corner scenario, by using the method of the present invention, a more realistic result is obtained. As discussed above, the present method takes into account the presence of pedestrians and their concentration in a medium range. Further, using a dynamic update of the navigation field, every few seconds for example, pedestrians that were not included into the estimation at the beginning are as well taken into account as they enter the simulation area. Pedestrians that are no longer in the simulation area are no longer taken into account in a dynamic update of the navigation field. As a result, by taking into account correctly the density of pedestrians present in the area at a certain time, a more realistic model may be constructed regarding the area that is subject to simulation.

The situation is the same regarding the simulation of pedestrian behaviour in corridors. Most conventional microscopic pedestrian simulators suffer from the drawback that they do not simulate realistically the behaviour of pedestrians in corridors.

As opposed to the scenario regarding corners, in corridors there are no points of concentration, for example at an edge of the corner. But in corridors there are repelling surfaces, the surfaces of the walls. Further in the corner scenario, the pedestrians tend to move all in the same direction, as opposed to the corridors where the pedestrians tend to move in two different direction. As a result lanes are observed to form, for each direction of movement. In accordance with the method of the invention, the pedestrians moving in each opposing direction may be distinguished from each other and taken into consideration in the calculation of the navigation field by employing the applicable formula 3 for the calculation of the speed F. This leads to a more realistic representation of the movement of pedestrians in the corridor. In contrast, in the conventional static models only one pedestrian flow at the time can be taken into consideration, and as a result the simulation of pedestrians in the corridor is not realistic.

Of course apart from the scenarios discussed above, in connection with a corner and a corridor, other spatial configurations may be as well simulated with the help of the present methods.

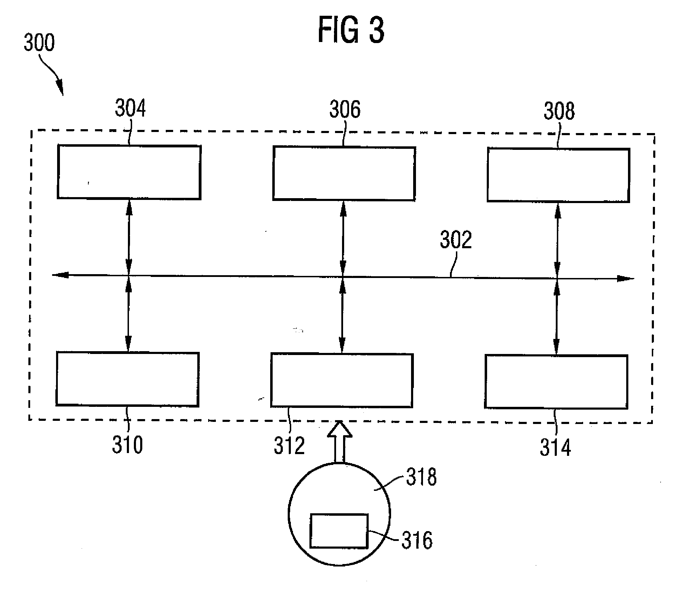

Turning now to the illustration of figure 3, figure 3 is an embodiment of a data processing system in which a method for predicting the behaviour of pedestrians may be implemented.

FIG. 3 is an embodiment of a data processing system 300 in which an embodiment of a method of predicting the behaviour of pedestrians may be implemented. The data processing system 300 of FIG. 3 may be located and/or otherwise operate at any node of a computer network, that may exemplarily comprise clients, servers, etc., not illustrated in the figure. In the embodiment illustrated in FIG. 3, data processing system 300 includes a communications fabric 302, which provides communications between a processor unit 304, a memory 306, a persistent storage 308, a communication unit 310, an input/output (I/O) unit 312, and a display 314.

The processor unit 304 serves to execute instructions for software that may be loaded into memory 306. Processor unit 304 may be a set of one or more processors or may be a multi-processor core, depending on the particular implementation. Further, the processor unit 304 may be implemented using one or more heterogeneous processor systems in which a main processor is present with secondary processors on a single chip. As another illustrative example, the processor unit 304 may be a symmetric multi-processor system containing multiple processors of the same type.

In some embodiments, the memory 306 shown in FIG. 3 may be a random access memory or any other suitable volatile or nonvolatile storage device. The persistent storage 308 may take various forms depending on the particular implementation. For example, the persistent storage 308 may contain one or more components or devices. The persistent storage 308 may be a hard drive, a flash memory, a rewritable optical disk, a rewritable magnetic tape, or some combination of the above. The media used by the persistent storage 308 also may be removable such as, but not limited to, a removable hard drive.

The communication unit 310 shown in FIG. 3 provides for communications with other data processing systems or devices. In these examples, communication unit 310 is a network interface card. Modems, cable modem and Ethernet cards are just a few of the currently available types of network interface adapters. The communication unit 310 may provide communications through the use of either or both physical and wireless communications links.

The input/output unit 312 shown in FIG. 3 enables input and output of data with other devices that may be connected to data processing system 300. In some embodiments, input/output unit 312 may provide a connection for user input through a keyboard and mouse. Further, input/output unit 312 may send output to a printer. Display 314 provides a mechanism to display information to a user.

Instructions for the operating system and applications or programs are located on the persistent storage 308. These instructions may be loaded into the memory 306 for execution by processor unit 304. The processes of the different embodiments may be performed by processor unit 304 using computer implemented instructions, which may be located in a memory, such as memory 306. These instructions are referred to as program code, computer usable program code, or computer readable program code that may be read and executed by a processor in processor unit 304. The program code in the different embodiments may be embodied on different physical or tangible computer readable media, such as memory 306 or persistent storage 308.

Program code 316 is located in a functional form on the computer readable media 318 that is selectively removable and may be loaded onto or transferred to data processing system 300 for execution by processor unit 304. Program code 316 and computer readable media 318 form a computer program product 320 in these examples. In one example, the computer readable media 318 may be in a tangible form, such as, for example, an optical or magnetic disc that is inserted or placed into a drive or other device that is part of persistent storage 308 for transfer onto a storage device, such as a hard drive that is part of persistent storage 308. In a tangible form, the computer readable media 318 also may take the form of a persistent storage, such as a hard drive, a thumb drive, or a flash memory that is connected to data processing system 300. The tangible form of computer readable media 318 is also referred to as computer recordable storage media. In some instances, computer readable media 318 may not be removable.

Alternatively, the program code 316 may be transferred to data processing system 300 from computer readable media 318 through a communications link to the communication unit 310 and/or through a connection to input/ output unit 312. The communications link and/or the connection may be physical or wireless in the illustrative examples. The computer readable media also may take the form of non- tangible media, such as communications links or wireless transmissions containing the program code.

The different components illustrated for data processing system 300 are not meant to provide architectural limitations to the manner in which different embodiments may be implemented. The different illustrative embodiments may be implemented in a data processing system including components in addition to or in place of those illustrated for data processing system 300. Other components shown in FIG. 3 can be varied from the illustrative examples shown. For example, a storage device in data processing system 300 is any hardware apparatus that may store data. Memory 306, persistent storage 308, and computer readable media 318 are examples of storage devices in a tangible form.

Therefore, as it may be seen from Fig. 3 in accordance with one aspect of the present invention, the present invention may be embodied by a system for simulating a movement of entities in an area, comprising at least a data bus system, a memory coupled to the data bus system, wherein the memory includes computer usable program code, a processing unit coupled to the data bus system, and wherein the processing unit executes the computer usable program code to identify a number of entities in movement in the area, and a direction of movement of the entities within the area, input information regarding a topology of the area and the identified information regarding the entities in movement in the area into a computing apparatus, perform a simulation of entities in the area, and calculate a prediction regarding a flow of entities by constructing a navigation field regarding the entities in the area depending on a density characteristic of entities in the area.

In accordance with another aspect of the present invention the invention is embodied by a computer program product for simulating a movement of entities in an area, comprising a tangible computer usable medium including computer usable program code for performing prediction of movement of entities, the computer usable program code being used for identifying a number of entities in movement in the area, and a direction of movement of the entities within the area, inputting information regarding a topology of the area and the identified information regarding the entities in movement in the area into a computing apparatus, performing a simulation of entities in the area, and calculating a prediction regarding a flow of entities by constructing a navigation field regarding the entities in the area depending on a density characteristic of entities in the area.

A data carrier may store the computer program for simulating the movement of entities in accordance with the means and methods of the present invention.

Accordingly, the disclosed embodiments present an apparatus, method and computer program product for simulating a movement of entities in an area. The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising, " when used in this specification, specify the presence of stated features, integers, steps, operations, elements, and/or components, but do not preclude the presence or addition of one or more other features, integers, steps, operations, elements, components, and/or groups thereof. The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

In addition, the flowchart and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function (s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

**Claims**

1. A method for simulating a movement of entities in an area, comprising:

    identifying a number of entities in movement in the area, and a direction of movement of said entities within said area;
    inputting information regarding a topology of the area and the identified information regarding the entities in movement in the area into a computing apparatus,
    performing a simulation of entities in said area; and
    calculating a prediction regarding a flow of entities by constructing a navigation field regarding the entities in said area depending on a density characteristic of entities in said area.

2. The method of claim 1, wherein the step of performing a simulation of entities in said area comprises:

    performing a temporal discretization of a time period the entities move in said area;
    identifying origins and destinations for the entities moving in said area, and
    constructing a navigation field based at least on a discrete topology of the area, the temporal discretization of a time period the entities move in said area, and on the identified origins and destinations of the entities in the area.

3. The method of claims 1 and 2, wherein constructing said navigation field is performed based on the density characteristic of entities being a local density of entities in the area.

4. The method of claims 1 and 2, wherein constructing said navigation field is performed based on the density characteristic of entities being a speed of the simulated entities as a function of the local density of entities.

5. The method of claim 1 and 2, wherein constructing said navigation field is performed based on the density characteristic of entities being a speed of the simulated entities as a function of a plurality of densities of entities, each density of said plurality of entities pertaining to entities moving in different directions.

6. The method of claims 2 to 5, wherein after a period of time the entities distribution in said area is changed and the navigation field is reconstructed based on the changed entities distribution in the area.

7. The method of claims 1 to 6, wherein the steps of said method are iterated till a prediction regarding the flow of entities is obtained.

8. The method of claims 1 to 7, wherein the navigation field is adapted to each new distribution of entities.

9. The method of claim 1, wherein results of the method are supporting a decision making of an operator in charge of the simulated area, the method further comprising:

    feeding back the calculated prediction to an operator to make a decision regarding the traffic management in the simulated area.

10. A system for simulating a movement of entities in an area, comprising:

    at least a data bus system,
    a memory coupled to the data bus system,
    wherein the memory includes computer usable program code, a processing unit coupled to the data bus system,
    wherein the processing unit executes the computer usable program code to
    identify a number of entities in movement in the area, and a direction of movement of said entities within said area;
    input information regarding a topology of the area and the identified information regarding the entities in movement in the area into a computing apparatus,
    perform a simulation of entities in said area; and
    calculate a prediction regarding a flow of entities by constructing a navigation field regarding the entities in said area depending on a density characteristic of entities in said area.

11. A computer program product for simulating a movement of entities in an area, comprising:

a tangible computer usable medium including computer usable program code for performing prediction of movement of entities, the computer usable program code being used for:

identifying a number of entities in movement in the area, and a direction of movement of said entities within said area;
inputting information regarding a topology of the area and the identified information regarding the entities in movement in the area into a computing apparatus,
performing a simulation of entities in said area; and
calculating a prediction regarding a flow of entities by constructing a navigation field regarding the entities in said area depending on a density characteristic of entities in said area.

**12.** A data carrier storing the computer program product for simulating the movement of entities of claim 11.

# FIG 1

# FIG 2

200

202

204

206

208

# FIG 3

Europäisches
Patentamt
European
Patent Office
Office européen
des brevets

**EUROPEAN SEARCH REPORT**

Application Number

EP 12 18 6241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | T. KRETZ, A. GROSSE, S. HENGST, L. KAUTZSCH, A. POHLMANN, P. VORTISCH: "Quickest paths in simulations of pedestrians", ADVANCES IN COMPLEX SYSTEMS, vol. 14, no. 5, October 2011 (2011-10), pages 733-759, XP55052868, DOI: 10.1142/S0219525911003281 * the whole document * | 1-12 | INV. G06N3/00 |
| X | D. HARTMANN: "Adaptive pedestrian dynamics based on geodesics", NEW JOURNAL OF PHYSICS, vol. 12, no. 4, 043032, 14 April 2010 (2010-04-14), XP020176119, DOI: 10.1088/1367-2630/12/4/043032 * sections 5 and 7 * | 1-12 | |
| X | J. Venel: "Modélisation mathématique et numérique de mouvements de foule", 27 November 2008 (2008-11-27), Université Paris Sud, XP55053029, * Partie III: programmation et résultats numériques * | 1-12 | TECHNICAL FIELDS SEARCHED (IPC)<br><br>G06N<br>G06F<br>G06Q |
| X | J.-F. Pietschmann: "On some partial differential equation models in socio-economic contexts - analysis and numerical simulations", 10 January 2012 (2012-01-10), University of Cambridge, XP55053027, * Part II: crowd motion * | 1-12 | |

-/--

The present search report has been drawn up for all claims

| Place of search | Date of completion of the search | Examiner |
|---|---|---|
| The Hague | 15 February 2013 | Douarche, Nicolas |

**EP 2 660 756 A1**

Europäisches
Patentamt

European
Patent Office

Office européen
des brevets

# EUROPEAN SEARCH REPORT

Application Number

EP 12 18 6241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | S. PATIL, J. VAN DEN BERG, S. CURTIS, M. C. LIN, D. MANOCHA: "Directing crowd simulations using navigation fields", IEEE TRANSACTIONS ON VISUALIZATION AND COMPUTER GRAPHICS, vol. 17, no. 2, February 2011 (2011-02), pages 244-254, XP011338411, DOI: 10.1109/TVCG.2010.33 * the whole document * ----- | 1-12 | |

TECHNICAL FIELDS
SEARCHED      (IPC)

The present search report has been drawn up for all claims

| Place of search | Date of completion of the search | Examiner |
|---|---|---|
| The Hague | 15 February 2013 | Douarche, Nicolas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2010061431 W

- WO 2011026708 A